# EUROPÄISCHE PATENTANMELDUNG

(11) **EP 0 916 692 A1**
(43) Veröffentlichungstag der Anmeldung: **19.05.1999**
(21) Anmeldenummer: 98119628.0
(22) Anmeldetag: 16.10.1998
(51) Int. Cl.: C08J 3/24, C09J 5/00, C09J 163/00, C09J 171/02

(54) **Gebrauchsfertige Zweikomponenten-Klebstoffzusammensetzung**

(30) Priorität: 13.11.1997 DE 19750386
(71) Anmelder: UHU GmbH, 77815 Bühl/Baden (DE)
(72) Erfinder: Hechenberger, Dieter A., 74889 Sinsheim (DE); Kost, Stefan H., Dr., 65719 Hofheim am Taunus (DE); Kapsa, Hans-Martin, 77833 Otterweier (DE)
(74) Vertreter: Jung, Elisabeth, Dr.

(57) **Zusammenfassung**

Die vorliegende Erfindung betrifft eine gebrauchsfertige Zweikomponenten-Klebstoffzusammensetzung sowie ein Verfahren zu ihrer Herstellung. Es hat sich als Nachteil üblicher Zweikomponentenklebstoffe erwiesen, daß die zu erreichende Festigkeit der Klebung ausgesprochen von der Einstellung des richtigen Mischungsverhältnisses der beiden Klebstoffkomponenten abhängt, was von seiten des Anwenders eine besonders sorgfältige Vorgehensweise beim Mischen und Dosieren erfordert. Ferner sind auch die kurzen Verarbeitungszeiten problematisch. Die Erfindung löst diese Probleme üblicher Zweikomponentenklebstoffe, indem eine gebrauchsfertige Zweikomponenten-Klebstoffzusammensetzung in Stiftform zur Verfügung gestellt wird. Dieser Klebstift enthält eine Binderkomponente und eine Härterkomponente und ist dadurch gekennzeichnet, daß innerhalb des Klebstiftes jeweils mindestens ein die Härterkomponente und ein die Binderkomponente enthaltendes Segment in gebrauchsfertiger Form anwesend sind, wobei diese Segmente mindestens eine Berührungsfläche in Längsrichtung des Stiftes gemeinsam haben.

## Beschreibung

Die vorliegende Erfindung betrifft eine gebrauchsfertige Zweikomponenten-Klebstoffzusammensetzung sowie ein Verfahren zu ihrer Herstellung.

Zweikomponentenklebstoffe sind im Bereich der privaten Haushalte ebenso wie in der Industrie seit vielen Jahren bekannt und zur Verklebung verschiedenster Werkstücke bewahrt.

Dabei handelt es sich regelmäßig um eine Binderkomponente und eine Härterkomponente, die in zwei separaten Behältern im Handel erhältlich sind, wobei der Endverbraucher vor einer Verwendung solcher Klebstoffe die beiden Komponenten in den erforderlichen Mengenverhältnissen miteinander homogen zu vermischen und anschließend innerhalb einer sogenannten "Topfzeit" von normalerweise nur wenigen Minuten zu verarbeiten hat.

Es hat sich allerdings als schwerwiegender Nachteil üblicher Zweikomponentenklebstoffe erwiesen, daß die zu erreichende Festigkeit der Klebung ausgesprochen von der Einstellung des Mischungsverhältnisses der beiden Klebstoffkomponenten abhängt, das wiederum von dem jeweils zugrundeliegenden Härtungsmechanismus bestimmt wird. Ist dieses Mischungsverhältnis nicht richtig eingestellt, so läßt die Klebwirkung erheblich nach, was wiederum von seiten des Anwenders eine besonders sorgfältige Vorgehensweise beim Mischen und Dosieren erfordert.

Ferner haben sich auch das oben beschriebene, relativ aufwendige Mischverfahren als solches sowie die normalerweise kurzen, für eine Verarbeitung des hergestellten Klebstoffs zur Verfügung stehenden "Topfzeiten" als ein wesentlicher, limitierender Faktor für die Anwendbarkeit, bzw. mindestens die Benutzerfreundlichkeit derartiger Zweikomponentenklebstoffe erwiesen.

Es ist daher die Aufgabe der vorliegenden Erfindung, diesen schwerwiegenden Mängeln der Zweikomponentenklebstoffe des Standes der Technik abzuhelfen. Die Erfindung löst diese Aufgabe, indem eine gebrauchsfertige Zweikomponenten-Klebstoffzusammensetzung in verfestigter Form in Form eines Klebestiftes zur Verfügung gestellt wird. Dieser erfindungsgemäße Klebstift enthält entsprechend einem üblichen Zweikomponentenklebstoff eine Binderkomponente und eine Härterkomponente und ist ferner dadurch gekennzeichnet, daß innerhalb des Klebstiftes jeweils mindestens ein die Härterkomponente und ein die Binderkomponente enthaltendes Segment in gebrauchsfertiger Form anwesend sind, wobei diese genannten Segmente mindestens eine Berührungsfläche in der Längsrichtung des Stiftes gemeinsam haben. Außerdem wird ein Verfahren zur Herstellung einer derartigen Klebstoffzusammensetzung in Form eines Klebstiftes zur Verfügung gestellt.

Im Rahmen einer bevorzugten Ausführungsform weist der erfindungsgemäße Klebstift einen kreisförmigen oder ellipsenförmigen, vorzugsweise einen ellipsenförmigem Querschnitt auf.

Im Rahmen einer anderen bevorzugten Ausführungsform des erfindungsgemäßen Klebstiftes liegen die genannten Segmente in Bereichen des Klebstifts vor, die durch parallel oder näherungsweise parallel zur Längsachse des Klebstiftes angeordnete Grenzflächen voneinander abgegrenzt sind.

Im Rahmen des erfindungsgemäßen Klebstiftes kontaktieren die genannten Segmente einander an den genannten Grenzflächen direkt, ohne durch irgendeine zusätzliche Trennschicht voneinander separiert zu sein. Erfindungsgemäß erfolgt dabei überraschenderweise keine Umsetzung der beiden Klebstoffkomponenten in einem nennenswerten Ausmaß, so daß im Ergebnis der erfindungsgemäße Klebstift eine ausgezeichnete Lagerungsstabilität aufweist und dessenungeachtet gleichwohl ständig in unmittelbar gebrauchsfertiger Form vorliegt.

Der Stift wird in der Praxis auf der zu verklebenden Oberfläche abgerieben, wobei eine automatische Mischung der Binderkomponente mit der Härterkomponente im erforderlichen Mischungsverhältnis vorgenommen wird, wodurch die Klebwirkung ausgelöst wird.

Im Rahmen einer besonders bevorzugten Ausführungsform eines erfindungsgemäßen Klebstifts sind die genannten Segmente so angeordnet, daß eine beliebige, auf die Längsachse des Klebstiftes senkrecht stehende und den Querschnitt des Klebstiftes exzentrisch schneidende Achse jeweils durch mindestens ein aus Binderkomonente und gleichzeitig durch mindestens ein aus Härterkomponente bestehendes Segment hindurchläuft. Diese Anordnung ist mit dem Vorteil verbunden, daß im Zuge des Verstreichens eines derartigen Klebstiftes eine automatische Mischung von Härterkomponente und Binderkomponente in dem jeweils erforderlichen Mischungsverhältnis stattfindet, ohne daß es hierfür weiterer, besonderer Dosierungsmaßnahmen von seiten des Anwenders bedarf. Eine derartige Anordnung ist also wesentlich benutzerfreundlicher als die Zweikomponentenklebstoffe des Standes der Technik.

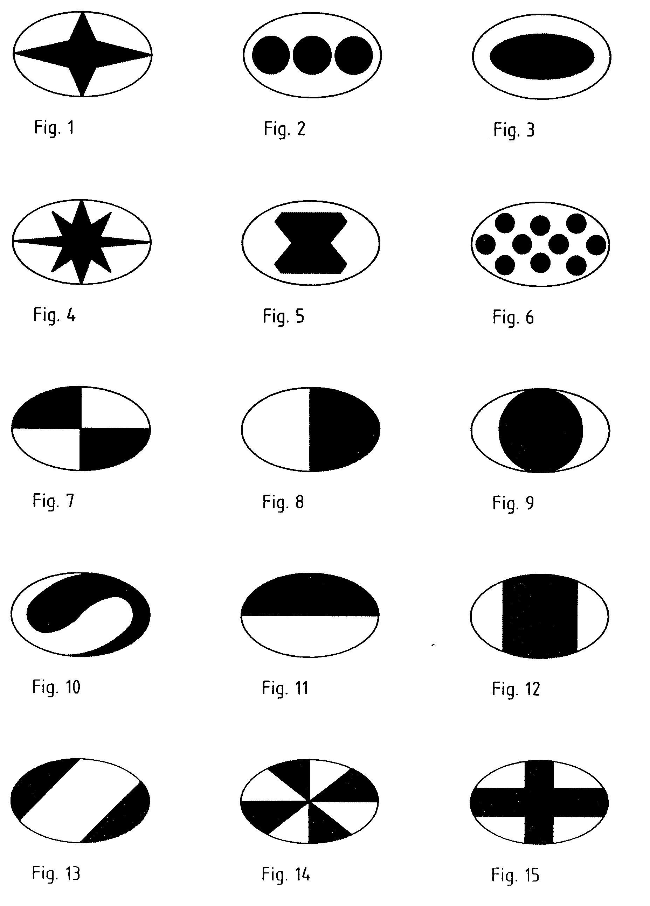

Im Rahmen der Figuren 1 bis 15 sind einige bevorzugte Ausführungsformen für die Anordnung der aus den beiden Klebstoffkomponenten bestehenden Segmente innerhalb des Querschnitts eines erfindungsgemäßen Klebstiftes wiedergegeben.

Im Rahmen einer besonders bevorzugten Ausführungsform eines erfindungsgemäßen Klebstifts sind die genannten Segmente in einer solchen Art und Weise angeordnet, daß der genannte Querschnitt des Klebstiftes aus mindestens 2, vorzugsweise 4 in der Art eines Tortengrundrisses radial oder näherungsweise radial angeordneten, in der Querschnittsmitte aufeinander stoßenden Keilflächen besteht (vgl. hierzu die Figuren 7 und 14).

Im Rahmen einer anderen, besonders bevorzugten Ausführungsform eines erfindungsgemäßen Klebstifts sind die genannten Segmente in einer solchen Art und Weise angeordnet, daß der genannte Querschnitt des Klebstiftes aus mindestens 2, vorzugsweise 2 komplementär angeordneten Flächen besteht, die nach jeweils mindestens einer Seite durch vorzugsweise in S-Form gekrümmte Kurvenverläufe begrenzt werden, so daß die besagte Querschnittsfläche insgesamt dem Aussehen zweier ineinandergreifend angeordneter, komplementärer, tropfenförmiger Kurvenflächen entspricht (vgl. hierzu die Fig. 10).

Im Rahmen einer weiteren, besonders bevorzugten Ausführungsform eines erfindungsgemäßen Klebstifts sind die genannten Segmente in einer solchen Art und Weise angeordnet, daß der genannte Querschnitt des Klebstiftes aus mindestens 2, vorzugsweise 2 konzentrisch angeordneten Kreisen und/oder Kreisringflächen oder Ellipsen und/oder ellipsenförmigen Ringflächen besteht (vgl. hierzu die Fig. 3).

Die Binderkomponente enthält zweckmäßig entweder ein Epoxidharz oder dessen Vorläufer, oder alternativ einen Gehalt an Polyethylenglykol oder ein Gemisch verschiedener, vorzugsweise ein Gemisch von zwei verschiedenen Polyethylenglykolsorten.

Die Binderkomponente einer bevorzugten Ausführungsform eines erfindungsgemäßen Klebstifts enthält einen Gewichtsanteil von 90 bis 99 Gew.-%, vorzugsweise von 97 Gew.-% Epoxidharz oder einen entsprechenden Anteil eines Epoxidharzgemisches und außerdem einen Gewichtsanteil von 1 bis 10 Gew.-%, vorzugsweise von 3 Gew.-% Dibenzylidensorbit (DBS) (erhältlich von der Firma Roquette GmbH).
Im Rahmen einer besonders bevorzugten Ausführungsform eines erfindungsgemäßen Klebstifts enthält die Binderkomponente ein formuliertes Bisphenol-A-Epoxidharz.

Die Binderkomponente einer anderen bevorzugten Ausführungsform eines erfindungsgemäßen Klebstifts enthält einen Gewichtsanteil von 10 bis 50 Gew.-%, vorzugsweise von 31 Gew.-% Polyethylenglykol 1500, einen Gewichtsanteil von 49 bis 89 Gew.-%, vorzugsweise von 62 Gew.-% Polyethylenglykol 400 und außerdem einen Gewichtsanteil von 1 bis 10 Gew.-%, vorzugsweise von 7 Gew.-% Dibenzylidensorbit (DBS).

Die Härterkomponente kann beispielsweise ein Polyamid sein, falls die Binderkomponente ein Epoxidharz oder ein Epoxidharzgemisch ist, oder alternativ kann die Härterkomponente auch ein Isocyanat sein, falls die Binderkomponente ein Polyethylenglykol oder ein Polyethylenglykolgemisch ist.

Die Härterkomponente einer bevorzugten Ausführungsform eines erfindungsgemäßen Klebstifts enthält einen Gewichtsanteil von 70 bis 99 Gew.-%, vorzugsweise von 88 Gew.-% eines formulierten Polyaminoamids oder einen entsprechenden Anteil eines Gemisches von formulierten Polyaminoamiden und außerdem einen Gewichtsanteil von 1 bis 30 Gew.-%, vorzugsweise von 12 Gew.-% Dibenzylidensorbit (DBS).

Die Härterkomponente einer anderen bevorzugten Ausführungsform eines erfindungsgemäßen Klebstifts enthält einen Gewichtsanteil von 70 bis 99 Gew.-%, vorzugsweise von 94 Gew.-% eines Isocyanats oder einen entsprechenden Anteil eines Gemisches von Isocyanaten und außerdem einen Gewichtsanteil von 1 bis 30 Gew.-%, vorzugsweise von 6 Gew.-% Dibenzylidensorbit (DBS).

Im Rahmen einer besonders bevorzugten Ausführungsform eines erfindungsgemäßen Klebstifts enthält die Härterkomponente ein unter dem Handelsnamen *Desmodur VKS* von der *Firma Henkel KGaA* erhältliches Isocyanat.

Entsprechend einer besonders bevorzugten Ausführungsform ist ein erfindungsgemäßer Klebstift in einem Gehäuse in Form eines üblichen, manuell regelbaren Dosiersystems angeordnet, das aus einem üblichen Gebrauchskunststoff, vorzugsweise aus Polyoxymethylen besteht.

Eine besonders bevorzugte Ausführungsform eines derartigen erfindungsgemäßen Gehäuses in Form eines üblichen Dosiersystems wird nachfolgend anhand der Figuren 16 bis 24 ausführlich beschrieben.
Fig. 16 zeigt ein Gehäuse für eine erfindungsgemäße Klebstoffzusammensetzung als Spritzformling, und zwar die die erfindungsgemäße Klebstoffzusammensetzung aufnehmende Hülse mit angespritztem Kolben im Schnitt;
Fig. 17 zeigt das Gehäuse für eine erfindungsgemäße Klebstoffzusammensetzung mit angespritztem Kolben im Schnitt von der Seite;
Fig. 18 zeigt einen Schnitt des Gehäuses als Spritzformling;
Fig. 19 zeigt einen Schnitt in Höhe der Borsten von unten;
Fig. 20 zeigt das Gehäuse für eine erfindungsgemäße Klebstoffzusammensetzung in der Ansicht von oben;
Fig. 21 zeigt einen Schnitt des Gehäuses für eine erfindungsgemäße Klebstoffzusammensetzung im Gebrauchszustand;
Fig. 22 zeigt einen Schnitt des Gehäuses für eine erfindungsgemäße Klebstoffzusammensetzung im Zustand maximalen Verbrauchs der erfindungsgemäßen Klebstoffzusammensetzung(Endzustand);
Fig. 23 zeigt die besondere Ausgestaltung der Kolbenplatte und ihre Anordnung in Kombination mit der Hülse im Spritzformling;
Fig. 24 zeigt das Zusammenwirken der Kolbenplatte mit der Innenwand der Hülse beim Auf- und Abbewegen.

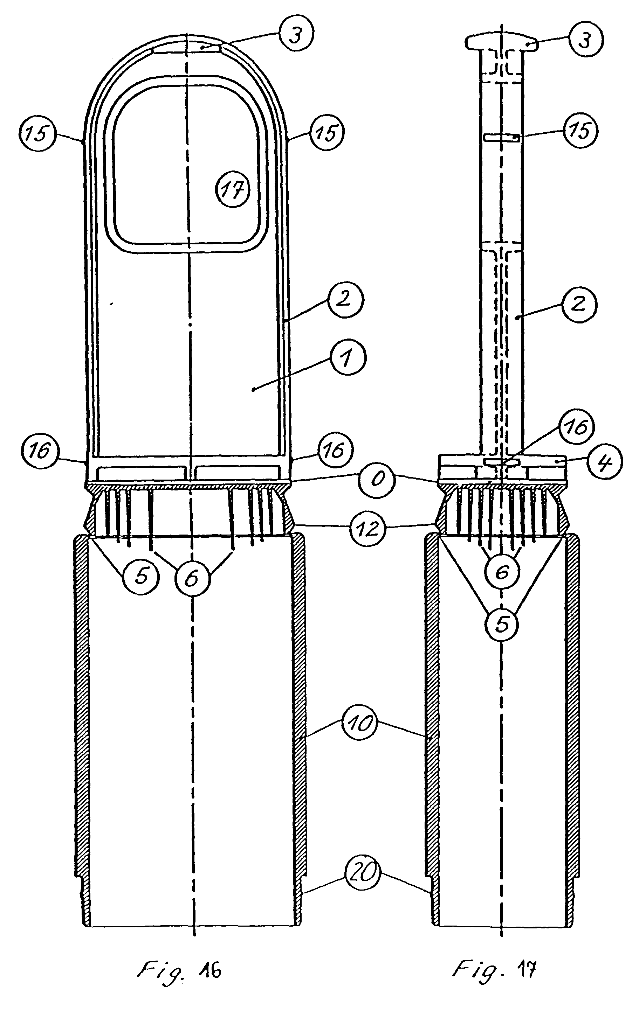

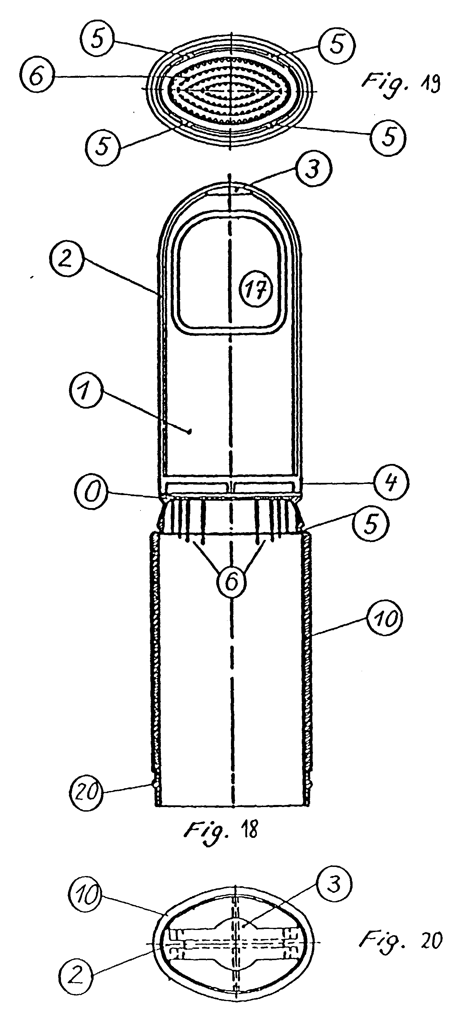

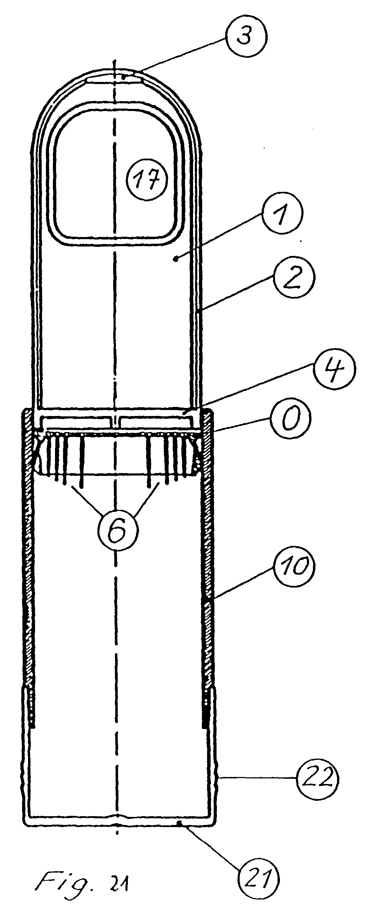

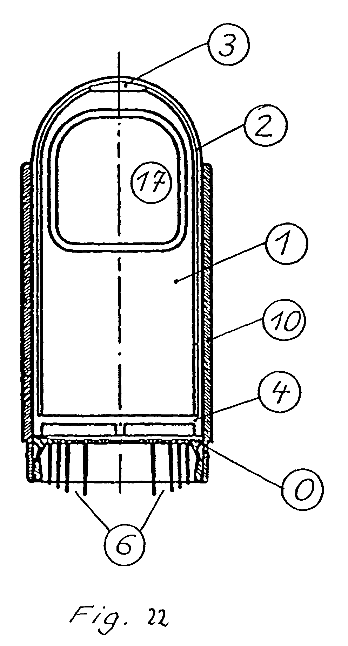

Wie die Figuren 16 bis 20 zeigen, ist das plattenförmige Element (1) beidseitig über Verstärkungsstege (2) mit einer Kolbenplatte (0) verbunden, wobei der Kolben an seinem unteren Rand über Anspritzbrücken (5) eine Einheit mit der Hülse (10) bildet, die einen Schnappring (20) aufweist. Die Kolbenplatte (0) weist eine Anordnung von Borsten (6) auf, die als Halterungselemente für die erfindungsgemäße Klebstoffzusammensetzung dienen. Das plattenförmige Element (1) ist am Scheitelpunkt mit der Druckplatte (3) versehen. Vorzugsweise weist das plattenförmige Element (1) am oberen Ende einen Durchgriff (17) auf, der ein oder zwei Finger aufnimmt, so daß es leicht in Axialrichtung bewegt werden kann. Die Fläche (4), welche oberhalb der Kolbenplatte (0) umläuft, sorgt für eine Stabilisierung des Kolbens wärend des Gebrauchs und wirkt einem Kippen desselben entgegen.

Die Figuren 16, 17 und 18 zeigen den einteiligen Spritzformling so, wie er aus dem Werkzeug herausfällt. Zum Befüllen mit der erfindungsgemäßen Klebstoffzusammensetzung (vgl. Fig. 21) werden die Anspritzbrücken (5) abgebrochen und die Kolbenplatte etwas in die Hülse hineingeschoben.

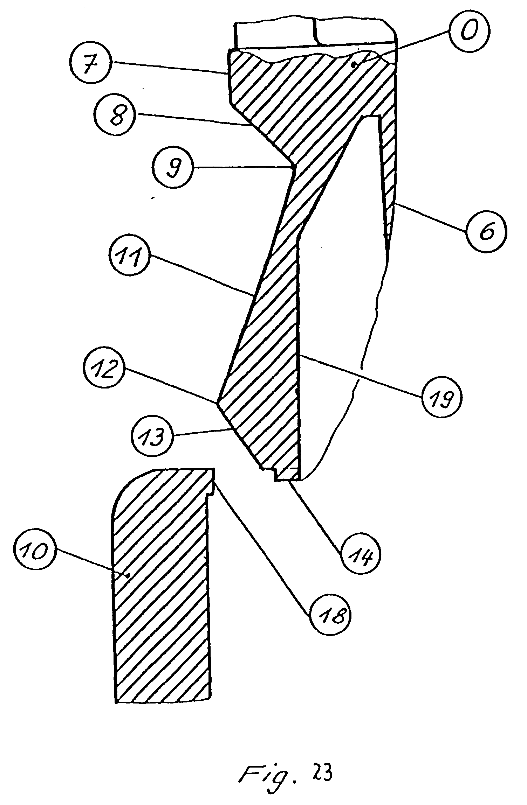

Sehr zweckmäßig weist das plattenförmige Antriebselement (1) im oberen Teil der Verstärkungsstege (2) jeweils Nocken (15) auf, wodurch beim axialen Bewegen desselben ein zu weites Durchschieben durch die Hülse (10) verhindert wird (vgl. Fig. 22).

Ferner sind auch am Umfang der Fläche (4) bevorzugt Nocken (16) vorgesehen, welche die Funktion haben, als Rückzugssperre zu dienen, so daß der Kolben nach dem Gebrauch des erfindungsgemäßen Klebstiftes nicht nach oben aus der Hülse (10) herausgezogen wird (vgl. Fig. 21).

Eine besondere Ausgestaltung der Kolbenplatte (0) sorgt dafür, daß die erfindungsgemäße Klebstoffzusammensetzung bei der Axialbewegung des Antriebselements (1) fest mit dem Kolbenboden verbunden bleibt.

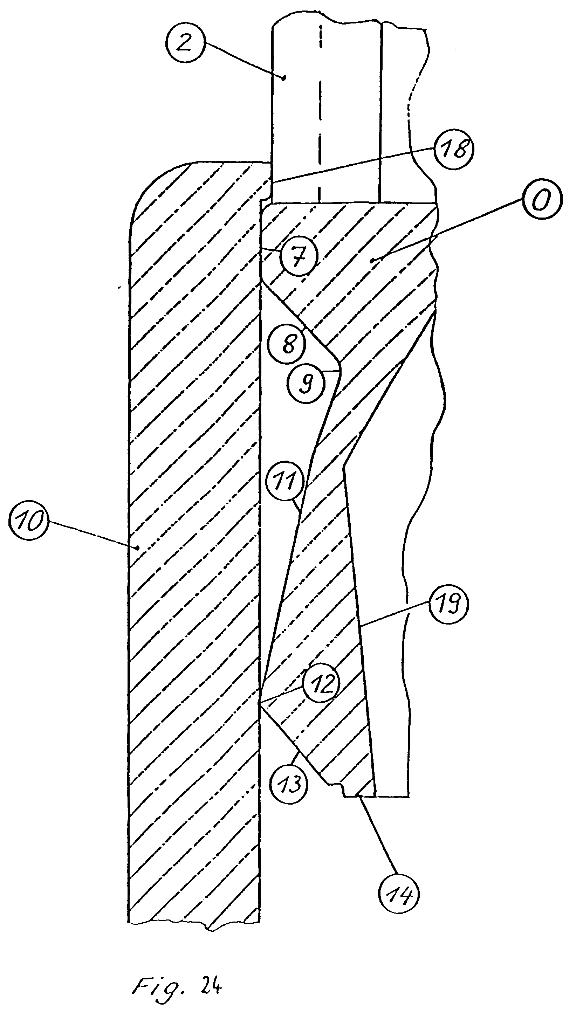

Diese Ausgestaltung wird anhand der Fig. 23 näher erläutert:

Die Kolbenplatte (0) weist an ihrem oberen, mit dem Antriebselement (1) fest verbundenen Ende eine einem Kippen des Antriebselementes (1) entgegenwirkende umlaufende Stabilisierungsfläche (7) auf, die sich nach unten in eine schräg nach innen laufende Fläche (8) bis zu einem Knickpunkt (9) fortsetzt. Von diesem Knickpunkt aus ist eine schräg nach außen verlaufende Wandfläche (11) vorhanden, die an ihrem Ende eine umlaufende Dichtungsfläche (12) bildet. Von letzterer aus verläuft eine weitere Wandfläche (13) schräg nach innen bis zur umlaufenden Innenkante (14).

Mittels der Innenkante (14) kann die Kolbenplatte (0) nach Abbrechen der Anspritzbrücken (5) und Einpressen des Antriebselements (1) in die Hülse (10) in eine umlaufende Innenrille (18) dieser Hülse eingreifen. Auf diese Weise wird ein Herausziehen des Kolbens aus der Hülse (10) vermieden.

Gemäß einer besonders bevorzugten Ausführungsform weist die Innenseite der Kolbenplatte unterhalb des Knickpunktes (9) eine parallel zur Kolbenachse verlaufende Fläche (19) auf, die sich bis zur Innenkante (14) erstreckt.

Wie durch Fig. 24 dargestellt wird, paßt sich diese Form der Kolbenplatte (0) beim weiteren Hineinschieben in die Hülse (10) gut an diese an. Die Fläche (19) wird dabei nach innen geknickt und bildet dadurch zusammen mit der Kante (14) einen Hintergriff und somit eine zusätzliche Verankerung für die Stiftmasse, so daß diese durch eine Axialbewegung des Antriebselements (1) auch zurückgezogen werden kann.

Für den Gebrauch drückt der Verbraucher per Hand auf die Druckplatte (3), wodurch sich der Kolben in die Hülse (10) hineinbewegt und der aus der erfindungsgemäßen Klebstoffzusammensetzung bestehende Klebstift sich in Richtung auf das offene Hülsenende hinbewegt. Durch die Form des plattenförmigen Elements (1) wird ein Kippen des Klebstifts bei Ellipsenform über die Längsachse α desselben verhindert. Gleichzeitig verhindert die Form der Verstärkungsstege (2) ein Abkippen des Kolbens über die kurze Achse β der Stiftellipse. Auch die Flächen (4) und (7) am Kolbenumfang wirken einem Verkanten des Kolbens entgegen, wie aus Fig. 21 ersichtlich ist.

Aus der in Fig. 22 wiedergegebenen Endstellung ist weiterhin zu erkennen, daß sich sowohl das plattenförmige Antriebselement (1) als auch die Verstärkungsstege (2) gut an die Innenwand der Hülse (10) anpassen und damit die Führung des Kolbens fördern.

Gemäß einer weiteren Ausführungsform der vorliegenden Erfindung wird ferner ein Verfahren zur Herstellung einer erfindungsgemäßen Klebstoffzusammensetzung in Form eines Klebstiftes zur Verfügung gestellt. Das erfindungsgemäße Verfahren ist dadurch gekennzeichnet, daß man die nachfolgend beschriebenen Verfahrensschritte (a.) bis (e.) nacheinander in dieser Reihenfolge durchführt:
(a.) Man verflüssigt die Binderkomponente und in einem separaten, weiteren Ansatz auch die Härterkomponente durch Erhitzen bis auf eine Temperatur im Bereich von jeweils 100 bis 200 °C, und
(b.) gießt entweder mit der flüssigen Binderkomponente oder der flüssigen Härterkomponente die verbleibenden Hohlräume eines vorbereiteten, mit einem Formstück versehenen Gehäuses aus, wobei das genannte Formstück vorzugsweise so dimensioniert ist, daß es etwa 50 % des Gehäusevolumens ausfüllt, und
(c.) man läßt die in Verfahrensschritt (b.) in die Hohlräume des genannten Gehäuses gegossene Härter- oder Binderkomponente auf Raumtemperatur abkühlen, entfernt anschließend das Formstück aus dem Gehäuse, und
(d.) gießt dann die im Innenraum des Gehäuses verbleibenden Hohlräume mit der flüssigen, im Rahmen von Verfahrensschritt (b.) nicht verwendeten, zweiten Klebstoffkomponente aus, und
(e.) läßt die in Verfahrensschritt (d.) in die Hohlräume des Gehäuses gegossene Härter- oder Binderkomponente ebenfalls bis auf Raumtemperatur abkühlen.

Gemäß einer bevorzugten Ausführungsform des erfindungsgemäßen Verfahrens wird im Rahmen von Verfahrensschritt (a.) die Härter- oder Binderkomponente jeweils bis auf eine Temperatur von 150 °C erhitzt.

Gemäß einer anderen bevorzugten Ausführungsform des erfindungsgemäßen Verfahrens besteht das im Rahmen von Verfahrensschritt (b.) erstmals genannte Formstück aus vorzugsweise mit Siliconöl beschichtetem Aluminium oder Teflon und weist außerdem vorzugsweise in der zum Boden des Gehäuses des Klebstiftes hin orientierten Richtung eine leichte Konizität entsprechend einer Längsachsennneigung im Bereich von etwa 0° bis 10°, vorzugsweise von 1° auf.

Gemäß einer weiteren bevorzugten Ausführungsform des erfindungsgemäßen Verfahrens besteht das genannte Gehäuse aus einem üblichen Gebrauchskunststoff, vorzugsweise aus Polyoxymethylen.

### Ausführungsbeispiel 1

Ein übliches Klebstiftgehäuse aus Polyoxymethylen wird mit einem Formstück aus mit Siliconöl beschichtetem Aluminium versehen, dessen Querschnitt aus 4 in der Art eines Tortengrundrisses radial oder näherungsweise radial angeordneten, in der Querschnittsmitte aufeinander stoßenden Keilflächen besteht und das ferner in der zum Boden des Gehäuses des Klebstiftes hin orientierten Richtung eine leichte Konizität entsprechend einer Längsachsennneigung von 1° aufweist.

Es werden 97 g handelsübliches Bisphenol-A-Epoxidharz (*Araldit AW 113*, erhältlich von der Firma *Ciba Spezialitätenchemie*) mit 3 g handelsüblichem Dibenzylidensorbit versetzt und innig vermischt. Die dabei entstehende weiße Paste wird dann bis auf eine Temperatur von 150 °C erhitzt und in flüssigem Zustand in die freigebliebenen Hohlräume des Gehäuses gegossen. Man erhält ein weißes, schwach trübes Gel, das man bis auf Raumtemperatur abkühlen läßt. Anschließend wird das Formstück aus dem Gehäuseinnenraum entfernt.

In einem separaten Ansatz werden 88 g handelsüblicher Härter in Form eines formulierten Polyaminoamids der Marke *HV 953 K/CGM* (erhältlich von der Firma *Ciba Spezialitätenchemie*) mit 12 g handelsüblichem Dibenzylidensorbit (DBS) versetzt und innig vermischt. Die dabei entstehende weiß-gelbliche Paste wird dann bis auf eine Temperatur von 150 °C erhitzt und in flüssigem Zustand in die noch verbliebenen Hohlräume des Gehäuses gegossen. Man erhält ein transparentes, gelbliches Gel, das man bis auf Raumtemperatur abkühlen läßt.

### Ausführungsbeispiel 2

Ein übliches Klebstiftgehäuse aus Polyoxymethylen wird mit einem Formstück aus mit Siliconöl beschichtetem Aluminium versehen, dessen Querschnitt aus 4 in der Art eines Tortengrundrisses radial oder näherungsweise radial angeordneten, in der Querschnittsmitte aufeinander stoßenden Keilflächen besteht und das ferner in der zum Boden des Gehäuses des Klebstiftes hin orientierten Richtung eine leichte Konizität entsprechend einer Längsachsennneigung von 1° aufweist.

Es werden 20 g festes Polyethylenglykol 1500 (erhältlich von der Firma *Hoechst AG*, bzw. der Nachfolgefirma *Clariant*) in 40 g flüssigem Polyethylenglykol 400 (erhältlich von der Firma *Hoechst AG*, bzw. der Nachfolgefirma *Clariant*) suspendiert, mit 4,5 g handelsüblichem Dibenzylidensorbit versetzt und innig vermischt. Die dabei entstehende weiße Paste wird dann bis auf eine Temperatur von 150 °C erhitzt und in flüssigem Zustand in die freigebliebenen Hohlräume des Gehäuses gegossen. Man erhält ein weißes, schwach trübes Gel, das man bis auf Raumtemperatur abkühlen läßt. Anschließend wird das Formstück aus dem Gehäuseinnenraum entfernt.

In einem separaten Ansatz werden 94 g handelsübliches Isocyanat der Marke *Desmodur VKS* (erhältlich von der Firma *Bayer AG*) mit 6 g handelsüblichem Dibenzylidensorbit (DBS) versetzt und innig vermischt. Die dabei entstehende weißgelbliche Paste wird dann bis auf eine Temperatur von 150 °C erhitzt und in flüssigem Zustand in die noch verbliebenen Hohlräume des Gehäuses gegossen. Man erhält ein translucentes, dunkelbraunes Gel, das man bis auf Raumtemperatur abkühlen läßt.

### Ausführungsbeispiele 3 und 4:

Es werden alle Schritte der Ausführungsbeispiele 1 und 2 wiederholt, aber mit der Abwandlung, daß diesmal jeweils ein Formstück aus mit Siliconöl beschichtetem Aluminium verwendet wird, dessen Querschnitt aus 2 komplementär angeordneten Flächen besteht, die nach jeweils einer Seite durch in S-Form gekrümmte Kurvenverläufe begrenzt werden, so daß die besagte Querschnittsfläche insgesamt dem Aussehen zweier ineinandergreifend angeordneter, komplementärer, tropfenförmiger Kurvenflächen entspricht. Abgesehen von der unterschiedlichen Anordnung der Härter- und Binderkomponente weist dieser Klebstift alle wesentlichen Merkmale der nach den Ausführungsbeispielen 1 und 2 erhaltenen Klebstifte auf.

## Patentansprüche

1. Klebstoffzusammensetzung, enthaltend eine Binderkomponente und eine entsprechende Härterkomponente eines Zweikomponentenklebstoffs,
dadurch **gekennzeichnet,**
daß sie in verfestigter Form als Klebstift vorliegt, und daß innerhalb des Klebstiftes jeweils mindestens ein die Härterkomponente und ein die Binderkomponente enthaltendes Segment in gebrauchsfertiger Form anwesend sind, wobei die Segmente mindestens eine Berührungsfläche in Längsrichtung des Stiftes gemeinsam haben.

2. Klebstoffzusammensetzung nach Anspruch 1, **dadurch gekennzeichnet,** daß der genannte Klebstift einen kreisförmigen oder ellipsenförmigen, vorzugsweise einen ellipsenförmigem Querschnitt aufweist.

3. Klebstoffzusammensetzung nach Anspruch 1 oder 2, **dadurch gekennzeichnet,** daß die genannten Segmente in Bereichen des Klebstifts vorliegen, die durch parallel oder näherungsweise parallel zur Längsachse des Klebstiftes angeordnete Grenzflächen voneinander abgegrenzt sind.

4. Klebstoffzusammensetzung nach einem der vorhergehenden Ansprüche, **dadurch gekennzeichnet**, daß die genannten Segmente so angeordnet sind, daß eine beliebige, auf die Längsachse des Klebstiftes senkrecht stehende und den Querschnitt des Klebstiftes exzentrisch schneidende Achse jeweils durch mindestens ein aus Binderkomonente und gleichzeitig durch mindestens ein aus Härterkomponente bestehendes Segment hindurchläuft.

5. Klebstoffzusammensetzung nach einem der vorhergehenden Ansprüche, **dadurch gekennzeichnet**, daß die genannten Segmente in einer solchen Art und Weise angeordnet sind, daß der genannte Querschnitt des Klebstiftes aus mindestens 2, vorzugsweise 4 in der Art eines Tortengrundrisses radial oder näherungsweise radial angeordneten, in der Querschnittsmitte aufeinander stoßenden Keilflächen besteht.

6. Klebstoffzusammensetzung nach einem der Ansprüche 1 bis 4, **dadurch gekennzeichnet**, daß die genannten Segmente in einer solchen Art und Weise angeordnet sind, daß der genannte Querschnitt des Klebstiftes aus mindestens 2, vorzugsweise 2 komplementär angeordneten Flächen besteht, die nach jeweils mindestens einer Seite durch vorzugsweise in S-Form gekrümmte Kurvenverläufe begrenzt werden, so daß die Querschnittsfläche insgesamt dem Aussehen zweier ineinandergreifend angeordneter, komplementärer, tropfenförmiger Kurvenflächen entspricht.

7. Klebstoffzusammensetzung nach einem der Ansprüche 1 bis 5, **dadurch gekennzeichnet**, daß die genannten Segmente in einer solchen Art und Weise angeordnet sind, daß der genannte Querschnitt des Klebstiftes aus mindestens 2, vorzugsweise 2 konzentrisch angeordneten Kreisen und/oder Kreisringflächen oder Ellipsen und/oder ellipsenförmigen Ringflächen besteht.

8. Klebstoffzusammensetzung nach einem der vorhergehenden Ansprüche, **dadurch gekennzeichnet**, daß die Binderkomponente mindestens eine Epoxidharzkomponente oder deren Vorläufer enthält.

9. Klebstoffzusammensetzung nach einem der vorhergehenden Ansprüche, **dadurch gekennzeichnet**, daß die Binderkomponente einen Gewichtsanteil von 90 bis 99 Gew.-%, vorzugsweise von 97 Gew.-% Epoxidharz oder einen entsprechenden Anteil eines Epoxidharzgemisches enthält.

10. Klebstoffzusammensetzung nach einem der vorhergehenden Ansprüche, **dadurch gekennzeichnet**, daß die Binderkomponente ein formuliertes Bisphenol-A-Epoxidharz enthält.

11. Klebstoffzusammensetzung nach einem der vorhergehenden Ansprüche, **dadurch gekennzeichnet**, daß die Binderkomponente außerdem einen Gewichtsanteil von 1 bis 10 Gew.-% Dibenzylidensorbit (DBS) enthält.

12. Klebstoffzusammensetzung nach Anspruch 11, **dadurch gekennzeichnet**, daß die Binderkomponente einen Gewichtsanteil von 3 Gew.-% Dibenzylidensorbit (DBS) enthält.

13. Klebstoffzusammensetzung nach einem der vorhergehenden Ansprüche, **dadurch gekennzeichnet**, daß die Härterkomponente einen Gewichtsanteil von 70 bis 99 Gew.-%, vorzugsweise von 88 Gew.-% eines formulierten Polyaminoamids oder einen entsprechenden Anteil eines Gemisches von formulierten Polyaminoamiden enthält.

14. Klebstoffzusammensetzung nach einem der vorhergehenden Ansprüche, **dadurch gekennzeichnet**, daß die Härterkomponente außerdem einen Gewichtsanteil von 1 bis 30 Gew.-% Dibenzylidensorbit (DBS) enthält.

15. Klebstoffzusammensetzung nach Anspruch 14, **dadurch gekennzeichnet**, daß die Härterkomponente einen Gewichtsanteil von 12 Gew.-% Dibenzylidensorbit (DBS) enthält.

16. Klebstoffzusammensetzung nach einem der Ansprüche 1 bis 7, **dadurch gekennzeichnet**, daß die Binderkomponente einen Gewichtsanteil von 10 bis 50 Gew.-%, vorzugsweise von 31 Gew.-% Polyethylenglykol 1500, einen Gewichtsanteil von 49 bis 89 Gew.-%, vorzugsweise von 62 Gew.-% Polyethylenglykol 400 enthält.

17. Klebstoffzusammensetzung nach Anspruch 16, **dadurch gekennzeichnet**, daß die Binderkomponente außerdem einen Gewichtsanteil von 1 bis 10 Gew.-% Dibenzylidensorbit (DBS) enthält.

18. Klebstoffzusammensetzung nach Anspruch 17, **dadurch gekennzeichnet**, daß die Binderkomponente einen Gewichtsanteil von 7 Gew.-% Dibenzylidensorbit (DBS) enthält.

19. Klebstoffzusammensetzung nach einem der Ansprüche 16 bis 18, **dadurch gekennzeichnet**, daß die Härterkomponente ein Isocyanat oder ein Isocyanatgemisch enthält.

20. Klebstoffzusammensetzung nach Anspruch 19, **dadurch gekennzeichnet**, daß die Härterkomponente einen Gewichtsanteil von 70 bis 99 Gew.-%, vorzugsweise von 94 Gew.-% eines Isocyanats oder einen entsprechenden Anteil eines Gemisches von Isocyanaten enthält.

21. Klebstoffzusammensetzung nach einem der Ansprüche 19 und 20, **dadurch gekennzeichnet**, daß die Härterkomponente ein unter dem Handelsnamen *Desmodur VKS* von der *Firma Henkel KGaA* erhältliches Isocyanat enthält.

22. Klebstoffzusammensetzung nach einem der Ansprüche 16 bis 21, **dadurch gekennzeichnet**, daß die Härterkomponente außerdem einen Gewichtsanteil von 1 bis 30 Gew.-% Dibenzylidensorbit (DBS) enthält.

23. Klebstoffzusammensetzung nach Anspruch 22, **dadurch gekennzeichnet**, daß die Härterkomponente einen Gewichtsanteil von 6 Gew.-% Dibenzylidensorbit (DBS) enthält.

24. Klebstoffzusammensetzung nach einem der vorhergehenden Ansprüche, **dadurch gekennzeichnet**, daß die Klebstoffzusammensetzung in Form des genannten Klebstiftes in einem Gehäuse in Form eines üblichen, manuell regelbaren Dosiersystems angeordnet ist, das aus einem üblichen Gebrauchskunststoff, vorzugsweise aus Polyoxymethylen besteht.

25. Verfahren zur Herstellung einer Klebstoffzusammensetzung nach einem der Ansprüche 1 bis 24, welches
**dadurch gekennzeichnet** ist,
daß man die folgenden Verfahrensschritte (a.) bis (e.) nacheinander in dieser Reihenfolge durchführt:
(a.) Man verflüssigt die Binderkomponente und in einem separaten, weiteren Ansatz auch die Härterkomponente durch Erhitzen bis auf eine Temperatur im Bereich von jeweils 100 bis 200 °C, und
(b.) gießt entweder mit der flüssigen Binderkomponente oder der flüssigen Härterkomponente die verbleibenden Hohlräume eines vorbereiteten, mit einem Formstück versehenen Gehäuses aus, wobei das genannte Formstück vorzugsweise so dimensioniert ist, daß es etwa 50 % des Gehäusevolumens ausfüllt, und
(c.) man läßt die in Verfahrensschritt (b.) in die Hohlräume des genannten Gehäuses gegossene Härter- oder Binderkomponente auf Raumtemperatur abkühlen, entfernt anschließend das Formstück aus dem Gehäuse, und
(d.) gießt dann die im Innenraum des Gehäuses verbleibenden Hohlräume mit der flüssigen, im Rahmen von Verfahrensschritt (b.) nicht verwendeten, zweiten Klebstoffkomponente aus, und
(e.) läßt die in Verfahrensschritt (d.) in die Hohlräume des Gehäuses gegossene Härter- oder Binderkomponente ebenfalls bis auf Raumtemperatur abkühlen.

26. Verfahren nach Anspruch 25, **dadurch gekennzeichnet**, daß im Rahmen von Verfahrensschritt (a.) die Härter- oder Binderkomponente jeweils bis auf eine Temperatur von 150 °C erhitzt wird.

27. Verfahren nach Anspruch 25 oder 26, **dadurch gekennzeichnet**, daß das im Rahmen von Verfahrensschritt (b.) erstmals genannte Formstück aus vorzugsweise mit Siliconöl beschichtetem Aluminium oder Teflon besteht.

28. Verfahren nach einem der Ansprüche 25 bis 27, **dadurch gekennzeichnet**, daß das im Rahmen von Verfahrensschritt (b.) erstmals genannte Formstück in der zum Boden des Gehäuses des Klebstiftes hin orientierten Richtung eine leichte Konizität entsprechend einer Längsachsennneigung im Bereich von etwa 0° bis 10°, vorzugsweise von 1° aufweist.

29. Verfahren nach einem der Ansprüche 25 bis 28, **dadurch gekennzeichnet**, daß das genannte Gehäuse aus einem üblichen Gebrauchskunststoff, vorzugsweise aus Polyoxymethylen besteht.
